# EUROPÄISCHE PATENTSCHRIFT

(11) **EP 1 845 404 B1**
(45) Veröffentlichungstag und Bekanntmachung des Hinweises auf die Patenterteilung: **28.10.2009**
(21) Anmeldenummer: 07005433.3
(22) Anmeldetag: 16.03.2007
(51) Int. Cl.: G02C 1/04, G02C 5/00

(54) **Brille, insbesondere Sportbrille**
Goggles, in particular sport goggles
Lunettes, en particulier lunettes de sport

(30) Priorität: 15.04.2006 DE 102006017770
(43) Veröffentlichungstag der Anmeldung: 17.10.2007
(73) Patentinhaber: Uvex Sports GmbH & Co. KG, 90763 Fürth (DE)
(72) Erfinder: Grau, Werner, 86316 Haberskirch (DE)
(74) Vertreter: Schneck, Herbert

(56) Entgegenhaltungen:
- US-A- 2 753 762
- US-A- 4 563 066
- US-A- 5 039 216
- US-A- 5 984 471
- US-A1- 2004 070 725
- US-A1- 2004 114 098

## Beschreibung

Die Erfindung richtet sich auf eine Brille, insbesondere eine Sportbrille, gemäß dem Oberbegriff von Anspruch 1. Eine solche Brille ist bekannt aus DE 38 13 761 A1, US 4 932 772 oder aus US 5 039 216.

Üblicher Weise sind Brillen im Bereich der seitlichen Enden des Rahmens mit einem Scharnier versehen, so dass die Brillenbügel nach innen eingeklappt werden können, wenn die Brille nicht benutzt wird. Dabei besteht die Gefahr, dass die Innenseite der Scheiben durch die Enden der Brillenbügel verkratzt wird, insbesondere wenn die Brille, wie zum Beispiel bei einem Skianzug, in einer relativ engen Tasche aufbewahrt wird. Darüber hinaus sind solche Scharniere bei der Herstellung kostenaufwändig, weil hierfür Metallpräzisionsteile erforderlich sind. Die Schrauben, die in der Regel für die Scharniere verwendet werden, können sich außerdem lösen und verloren geben.

Aus der US 2004/0114098 A1 ist eine Arbeitsschutzbrille bekannt, bei der die Bügel nicht um eine bezogen auf den Tragezustand vertikale Schwenkachse einklappbar sind, sondern um 180° um eine im Wesentlichen horizontale Schwenkachse nach innen geschwenkt werden können. Hierdurch wird zwar eine geringere Bauhöhe im eingeschwenkten Zustand der Bügel erreicht, jedoch besteht wiederum durch das Anliegen der Bügel an der Innenseite der Scheibe die Gefahr des Verkratzens, wenn die Brille in einer engen Tasche aufbewahrt wird.

Aus der US 2004/0070725 A1 ist eine weitere Brille bekannt, bei der die Bügel in eine Ausnehmung am oberen Rahmenteil eingeschoben werden können. Diese Bügel umfassen ein integriertes Scharnier, das in Gestalt besonderes flexibler Teilbereiche ausgebildet ist. Im ausgezogenen Zustand klappen die Bügel aufgrund dieses integrierten Scharniers automatisch in Richtung des Kopfes des Brillenträgers um.

Weiterhin wird in der US 5 984 471 eine andere Brille beschrieben, bei der die Brillenbügel in ein oberes Rahmenteil einschiebbar sind und im ausgezogenen Zustand mittels eines Schwenkscharniers umgeklappt werden können.

Es sind auch Brillen bekannt geworden, die keinerlei Scharnier aufweisen, bei welchen die Bügel zumindest abschnittsweise eine solche Elastizität aufweisen, dass sie nach innen umgebogen werden können. Da der hierfür mögliche Biegeradius aber nicht zu klein sein darf, sind solche Brillen, wenn die Brillen eingeklappt sind, relativ voluminös.

Hiervon ausgehend liegt der Erfindung die Aufgabe zu Grunde, eine Brille, insbesondere eine Sportbrille, so zu verbessern, dass die Brille im Nicht-Gebrauchszustand ein geringes Volumen aufweist, die Gefahr eines Verkratzens der Innenseite der Scheiben vermieden wird und die Gesamtkonstruktion einfach und dementsprechend kostengünstig ist, wobei gleichwohl ein ansprechendes Erscheinungsbild realisierbar sein soll.

Diese Aufgabe wird erfindungsgemäß gelöst durch die Merkmale des kennzeichnenden Teils von Anspruch 1.

Im Aufbewahrungszustand beansprucht eine solche Brille nur noch das Volumen der Scheibe zuzüglich des oberen Rahmenteils, so dass eine Aufbewahrung auch in engen Taschen möglich ist, wobei gleichzeitig die Gefahr eines Verkratzens der Scheiben vermieten wird, weil die Enden der Brillenbügel nicht in Kontakt mit der Scheibeninnenseite gelangen können. Insgesamt sind sehr schlanke, elegante Konstruktionen möglich, so dass ein markantes, ästhetisch ansprechendes Erscheinungsbild erzielbar ist.

Weiterhin sind Arretiereinrichtungen vorgesehen, um die Bügel im ausgefahrenen und/oder eingefahrenen Zustand zu arretieren, wobei die Arretiereinrichtungen insbesondere einen Rastvorsprung und eine Rastausnehmung umfassen können.

An den Enden der Bügel sind günstiger Weise Ohr-Auflage-Abschnitte aus einem hautfreundlichen Kunststoff angeordnet.

Nachfolgend wird die Erfindung an Hand eines bevorzugten Ausführungsbeispiels in Verbindung mit der Zeichnung näher erläutert. Dabei zeigen:
- Fig. 1: eine Ansicht einer erfindungsgemäßen Brille von hinten,
- Fig. 2: einen Schnitt längs der Linie II-II in Fig. 1 und
- Fig. 3: eine Aufsicht.

Eine in der Zeichnung dargestellte Brille 1 umfasst eine einstückige durchgehende gebogene Scheibe 2, die an der Außenseite eines oberen Rahmenteils 3 mit Hilfe von Rastelementen 4 in an sich bekannter Weise festgelegt ist. Beiderseits der Scheibe 2 sind Bügel 5 mit einem Ohr-Anlage-Abschnitt 6 angeordnet.

Das obere Rahmenteil 3 weist eine - im Ausführungsbeispiel geschlossene - Längsausnehmung 7 auf, die einen derart dimensionierten rechteckigen Querschnitt besitzt, so dass die Bügel 5 mit einem entsprechenden etwas geringeren Querschnitt in die Längsausnehmung 7 eingeschoben werden können und so definiert geführt bzw. positioniert sind.

Die Bügel 5 bestehen aus Federstahl, wobei die Ohr-Anlage-Ansätze 6 aus einem hautfreundlichen Kunststoff bestehen und aufgesteckt oder angespritzt sind.

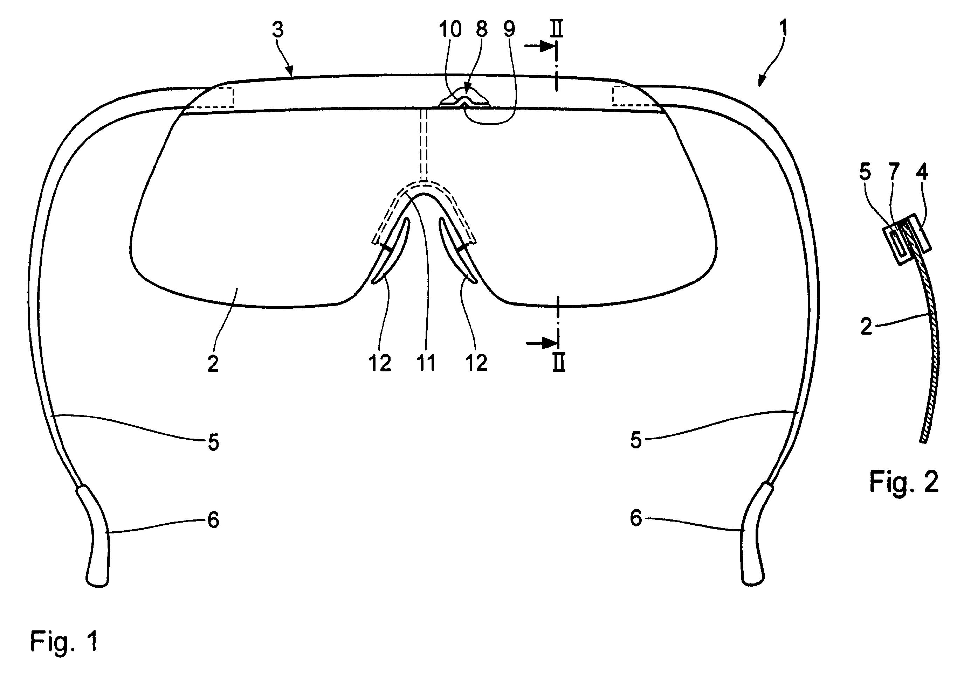

Um die Bügel 5 im vollständig ausgefahrenen oder vollständig eingefahrenen Zustand zu arretieren, sind Arretiereinrichtungen 8 vorgesehen, die aus einem Arretiervorsprung 9 und einer Arretierausnehmung 10 bestehen. In Fig. 1 ist im aufgebrochen gezeichneten mittleren Bereich nur die Arretiereinrichtung 8 für den in der Zeichnung rechten Bügel im eingefahrenen Zustand dargestellt.

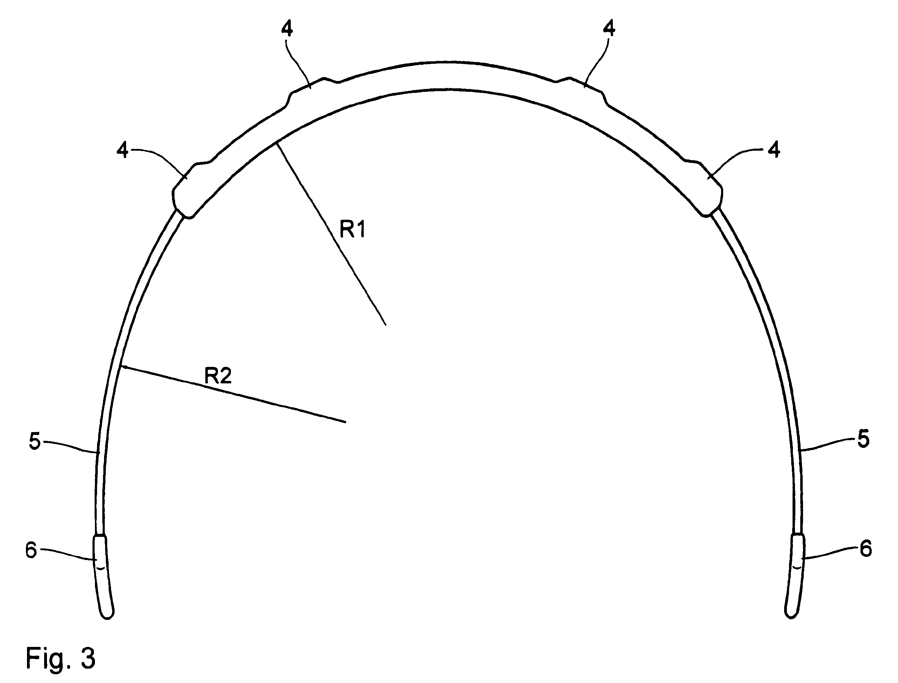

Wie insbesondere aus Fig. 3 erkennbar ist, weisen die Scheibe 2 und das obere Rahmenteil 3 einen Krümmungsradius R₁ auf.

Die Bügel 5 bestehen aus Federstahl, dem ein Krümmungsradius R₂ aufgeprägt ist, der in etwa dem Krümmungsradius R₁ entspricht, so dass die Bügel 5 mit geringem Widerstand in das obere Rahmenteil 3 eingefahren und wieder herausgezogen werden können.

Zur Erhöhung des Tragekomforts erstreckt sich vom oberen Rahmenteil 3 ein Halteteil 11 weg, an welchem zwei Nasenpads 12 angeordnet sind.

## Patentansprüche

1. Brille, insbesondere Sportbrille mit wenigstens einer Scheibe und ein längs der Oberkante der Scheibe angeordnetes oberes Rahmenteil und zwei Bügel, wobei das obere Rahmenteil (3) eine Längsausdehnung (7) aufweist und jeder Bügel (5) zum Aufbewahren der Brille (1) in die Längsausnehmung (7) einschiebbar und zur Benützung der Brille (1) aus dieser herausziehbar ist, wobei das obere Rahmenteil (3) gebogen ist und die Bügel (5) gekrümmt sind mit einem Krümmungsradius (R₂), der in etwa dem Krümmungsradius (R₁) des oberen Rahmenteils (3) entspricht, **dadurch gekennzeichnet, dass** Arretiereinrichtungen vorgesehen sind, um die Bügel (3) im ausgefahrenen und eingefahrenen Zustand zu arretieren, wobei die Arretiereinrichtungen (8) einen Rastvorsprung (9) und eine Rastausnehmung (10) umfassen, und die Bügel (5) aus Federstahl bestehen.

2. Brille nach Anspruch 1, **dadurch gekennzeichnet, dass** das obere Rahmenteil (3) aus Kunststoff besteht.

3. Brille nach Anspruch 1, **dadurch gekennzeichnet, dass** an den Enden der Bügel (5) Ohr-Auflage-Abschnitte (6) aus einem hautfreundlichen Kunststoff angeordnet sind.

## Claims

1. Goggles, in particular sport goggles, with at least one lens and an upper frame part arranged along the upper edge of the lens, and two sides, wherein the upper frame part (3) has a longitudinal recess (7) and each side (5) can be retracted into the longitudinal recess (7) to store the goggles (1) and can be drawn out therefrom to use the goggles (1) , the upper frame part (3) being bent and the sides (5) being curved with a radius (R₂) of curvature, which approximately corresponds to the radius (R₁) of curvature of the upper frame part (3), **characterised in that** locking devices are provided to lock the sides (3) in the extended and retracted state, the locking devices (8) comprising a latching projection (9) and a latching recess (10) and the sides (5) consisting of spring steel.

2. Goggles according to claim 1, **characterised in that** the upper frame part (3) consists of plastics material.

3. Goggles according to claim 1, **characterised in that** ear support portions (6) made of a skin-friendly plastics material are arranged at the ends of the sides (5).

## Revendications

1. Lunettes, en particulier lunettes de sport avec au moins un verre et un élément de cadre supérieur agencé le long de l'arête supérieure du verre et deux branches, l'élément de cadre supérieur (3) présentant un évidement longitudinal (7) et chaque branche (5) pouvant être insérée dans l'évidement longitudinal (7) pour ranger les lunettes (1) et être sortie de celui-ci pour utiliser les lunettes (1), l'élément de cadre supérieur (3) étant incurvé et les branches (5) étant courbées avec un rayon de courbure (R₂), qui correspond à peu près au rayon de courbure (R₁) de l'élément de cadre supérieur (3), **caractérisées en ce que** des dispositifs d'arrêt sont prévus pour bloquer les branches (5) en position sortie et rentrée, les dispositifs d'arrêt (8) comprenant une saillie d'arrêt (9) et un évidement d'arrêt (10), et les branches (5) sont en acier ressort.

2. Lunettes selon la revendication 1, **caractérisées en ce que** l'élément de cadre supérieur (3) est en plastique.

3. Lunettes selon la revendication 1, **caractérisées en ce que** des sections reposant sur les oreilles (6) en un plastique dermocompatible sont agencées aux extrémités des branches (5).
